# EUROPEAN PATENT APPLICATION

(11) **EP 4 198 325 A1**
(43) Date of publication of application: **21.06.2023**
(21) Application number: 22213972.7
(22) Date of filing: 15.12.2022
(51) Int. Cl.: F16C 1/26, F16G 13/16, H02G 3/04, H02G 11/00

(54) **GUIDE FOR A BENDABLE CONNECTING MEANS, SUCH AS A CABLE OR A WIRING**

(30) Priority: 16.12.2021 NL 2030151
(71) Applicant: LentoLin B.V., 7483 PE Haaksbergen (NL)
(72) Inventor: Nales, Roeland Hendrik Gerard, 7483 PE Haaksbergen (NL); Lammers, Gerrit Jan, 7483 PE Haaksbergen (NL)
(74) Representative: Arnold & Siedsma

(57) **Abstract**

Guide for at least one bendable connector, such as a cable, a conduit or a wire, comprising at least one elongate strip, of which at least a segment has a first configuration, in which the segment has a bent shape in a width direction, such that the segment is straight in the longitudinal direction, and which segment has a second configuration, in which the segment is straight in the width direction, such that the strip is bendable in the longitudinal direction.

## Description

The invention relates to a guide for a bendable connecting means, such as a cable or a wiring.

Such a guide is for instance known from U.S. Patent 7,055,656 or U.S. Patent 6,606,921. Said guides are composed of a plurality of individual links, for accommodating a cable, which links are connected to each other via hinges. The hinged connection of these links allows one link to rotate with respect to an adjacent further link, and thereby allows the guide to bend in order to guide the cable through a bend or curvature. However, such guides have disadvantages. For instance, the movements of the links with respect to each other may cause noise. Furthermore, parts moving with respect to each other may wear when subjected to repeated motion, said wear causing microscopic particles which may detriment operating conditions for machinery in which the guides are used. As such, the known cable guides are often not suitable for use in e.g. clean rooms without taking further precautions against dust.

It is now an object of the invention to obtain a guide which is less noisy and/or produces less dust or microparticles.

This object is achieved with a guide for a bendable connecting means, such as a cable or a wiring, comprising at least one elongate strip, of which at least a segment has a first configuration, in which the segment has a bent shape in a width direction, such that the segment is straight in the longitudinal direction, and which segment has a second configuration, in which the segment is straight in the width direction, such that the strip is bendable in the longitudinal direction.

The inventors of the current invention have found that such a strip, which at least has a segment which is moveable between said first and second configurations, allows the guide to become much more quiet and simple in construction compared to the prior art guides, such as the guides according to U.S. Patent 7,055,656 and U.S. Patent 6,606,921.

Preferably, the strip is moveable between the first and second configuration and back over substantially the full length of the strip. In this respect, a strip may be defined as a piece of material which is relatively long with respect to its width, and relatively wide with respect to its thickness.

The strip may extend over the entire length of the guide.

Typically, the guide according to the invention comprises at least one length of strip which strip extends along the connecting means, over substantially the full length of the guide, in contrast to the guides according to U.S. Patent 7,055,656 and U.S. Patent 6,606,921, which guides are made up of individual segments.

The connecting means is typically a cable, conduit or wiring. Such a cable or wiring can be any cable, but preferably is selected from a data cable, an electrical cable, a pneumatic cable, a hydraulic cable or a glass fiber and/or any combination thereof, either by having a plurality of cables or wirings and/or having cables or wirings falling within a plurality of the aforementioned classifications.

According to an embodiment of the guide, the first configuration of the segment is its neutral configuration. For instance, the segment may be pretensioned so as to be biased to the first configuration. In this neutral configuration, the segment has a bending stiffness, and as such is able to carry the connection means. Moreover, the curved shape in the neutral position can be used to partly enclose the connection means, thereby keeping it in place.

Practically, the at least one strip has a flexibility for bringing the segment from the first configuration to the second configuration upon application of an external force. The flexibility allows the strip to bend between its first and second configuration by deforming. Thus, no joints or hinges are necessary. In addition, the flexibility may enhance the durability of the strip, since fatigue as a result of periodical or frequent loading of the strip can be reduced.

The at least one strip may be made of a metal, such as steel, possibly spring steel. More generally, the strip may be made of any durable material that is sufficiently flexible for bringing the segment from the first to the second configuration upon application of said external force, while being sufficiently resilient to move back into the first configuration when disengaging said external force from the segment.

A further embodiment of the guide comprises two parallel strips. Advantageously, a cable can be arranged between the two strips to be securely guided by the guide by enclosing the cable on two opposite sides thereof. The two strips may allow the cable, even if the cable is enclosed on either side thereof, to be easily and quickly placed into and removed from the guide in case the strips are detachable from each other. The strips may be e.g. hooked into or snap-fitted onto each other, or integrally connected along their length. For instance, the two strips may constitute a single sheet folded in half along its length so as to form the two parallel strips for guiding the cable. Preferably, hollow sides of the two strips are directed towards each other to form a space for holding a cable of a variety of cross-sectional shapes and thicknesses.

A further embodiment of the guide comprises retaining means, for retaining the connecting means with respect to the guide, preferably in a direction at least perpendicular to the longitudinal direction of the guide. Such retaining means enable a secure guiding of a cable. In particular, the retaining means may contribute to preventing the cable, guided by the segment in particularly the first configuration, from moving transversely with respect to the strip, e.g. in the width direction, and/or from disengaging from the segment in the first configuration.

Preferably, the retaining means are arranged on the at least one strip. This enables the retaining means to be in the proximity of the cable or other connecting means held by the strip in order to obtain a compact guide. Alternatively or additionally, the retaining means comprises an enclosure, extending around the at least one strip and the connecting means, and possibly around more than one of the at least one strip. Such an enclosure can for instance keep two parallel strips together or ensure a cable remains held by a single strip. It is further preferred if the enclosure is a braided, knitted or woven mantle. Such a mantle can flexibly curve along with the cable guided by the guide and can provide a durable cover for the guide to protect e.g. the strips against wear and tear. Such an enclosure may further be disassembled from the strip or strips to be replaced after wear.

The retaining means are preferably configured to retain the connecting means in the first configuration of the at least one strip. It is then further preferred if the retaining means are configured to at least partially release the connecting means in the second configuration of the at least one strip. For instance, the retaining means may release a guided cable upon straightening of the strip in the width direction when moving to the second configuration. The segment in the second configuration is then no longed curved about the cable in the width direction, which may disengage the retaining means from the cable. For this, the retaining means are preferably connected to the strip spaced apart from the center of the strip in the transverse direction thereof, preferably at or near a side end zone, such as the side. In that case, the retaining means connected to a segment move away from the cable in the width direction upon straightening the segment in the width direction in the second configuration. Similarly, the retaining means engage the cable upon bending the segment in the width direction when moving the segment from the second to the first configuration. The retaining means engaging and disengaging the cable, when moving between the first and second configurations, allows relative movement of the connection means and the guide where they are bent in the longitudinal direction.

Alternatively or additionally, the retaining means may be moveable with respect to the strip in a longitudinal direction thereof. This allows the cable retained by the retaining means, e.g. by clamping, to move with respect to the strip in said longitudinal direction. This way, when bending the cable together with a segment in the longitudinal direction of the strip toward the second configuration of the segment, the moving of the retaining means, in the resulting curve of the segment and the cable, obviates a length difference between the curved segment and the curved cable held radially inward or outward with respect to the curved segment. The guide and cable being mutually moveable as described above prevents stress in the guide and/or on the cable. It is further preferred if the retaining means are arranged in corresponding longitudinal slots in the at least one strip. In that case, the slots may be provided longitudinally, for instance along the center of the strip, to allow sliding of the retaining means along the center of the strip.

In further embodiment the guide comprises at least one channel, extending parallel to the at least one strip in the longitudinal direction. The channel allows guiding of additional connecting means, such as a flat cable or multiple wirings, cables or conduits, held therein, separated from the strip. The channel may completely surround the connection means as seen in cross section at least along the length of the segment.

Preferably, the channel and the at least one strip are provided with cooperating detachable first coupling means, such as a snap coupling. Such coupling means enable a modular build-up of the guide. Additional strips and channels can be therewith modularly coupled to or detached from each other to allow adjusting the guide according to specific circumstances, e.g. the specific cables to be guided and the quantity thereof.

More generally, the guide may comprise second coupling means, for coupling the guide to a further guide with cooperating coupling means. This way, two guides, each comprising a strip or a channel, can be coupled to and detached from each other via the second coupling means and the cooperating coupling means. For instance, the strip of one guide may be provided with the second coupling means to couple to the cooperating coupling means provided on the strip of the other guide. This way, a cable can be quickly replaced by replacing the guide along with the cable, such that the cable can remain in the guide.

According to another aspect of the invention, a combination of a guide according to any one or more of the foregoing embodiments and a connecting means, such as a cable or a wiring, is provided. Preferably, the connecting means is tied to the guide. The connecting means may thus be securely held by the guide.

According to yet another aspect of the invention, a device is provided, wherein the device comprises two elements which are moveable with respect to each other, connected by a combination as described above. In case one of the elements applies a force on the cable in the longitudinal direction thereof, the force may be transferred via the cable, guided by the guide, to the other element for a mutual movement of the elements.

According to yet another aspect, the invention relates to a use of a guide according to any one or more of the foregoing embodiments for guiding a bendable connecting means, such as a cable or a wiring. For instance, said use may comprise the use of the guide in a device as described above.

The invention is hereafter elucidated with reference to the attached drawings, wherein:
- Figure 1 shows a guide comprising two parallel strips;
- Figures 2-5 show guides comprising retaining means;
- Figures 6-8 show guides comprising a strip and a channel, and;
- Figure 9 shows a guide comprising a strip held between two parallel profiles.

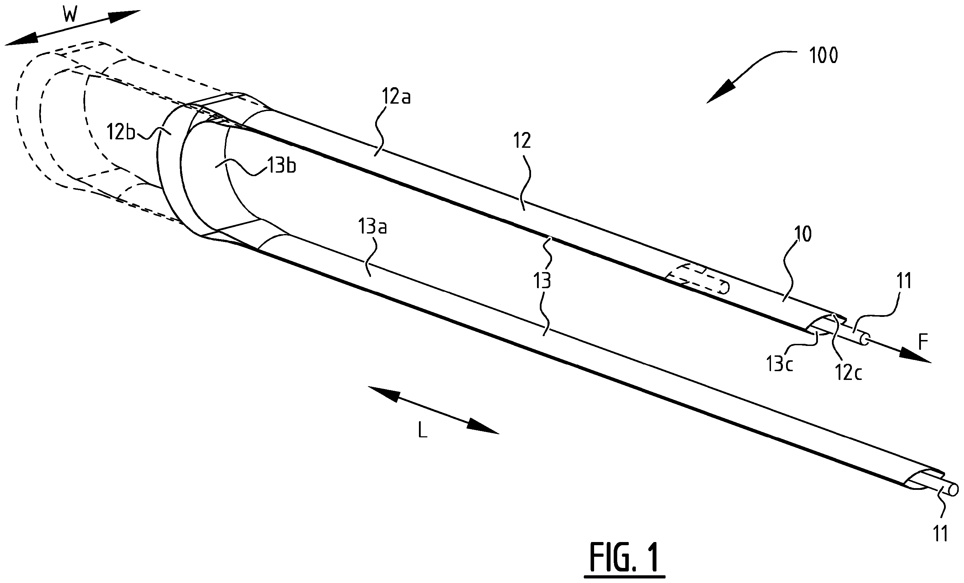

Figure 1 shows a combination 100 of a first embodiment of the guide 10 and a cable 11. The cable 11 is held within the guide 10. The guide 10 comprises two parallel strips, an outer elongate strip 12 and an inner elongate strip 13. Of the elongate strips 12 and 13 a first segments, respectively 12a and 13a, are shown in a first configuration in which each segment 12a, 13a has a bent shape in a width direction W such that the segment is straight in the longitudinal direction L, and a second segment, respectively 12b and 13b, is shown in a second configuration in which the segment 12b, 13b is straight in the width direction W such that the strip 12, 13 is bendable in the longitudinal direction L. Hollow sides 12c, 13c of the two strips 12, 13 are directed towards each other. Although the first segments 12a, 13a are shown in the first configuration and the second segments 12b, 13b are shown in the second configuration, each of the first segments 12a, 13a and the second segments 12b, 13b is moveable between the first and second configuration, since each of the strips 12, 13 has a flexibility for bringing the first segment 12a, 13a from the first configuration to the second configuration upon application of an external force (indicated in figure 1 by arrow F) and the second segment 12b, 13b from the second configuration to the first configuration.

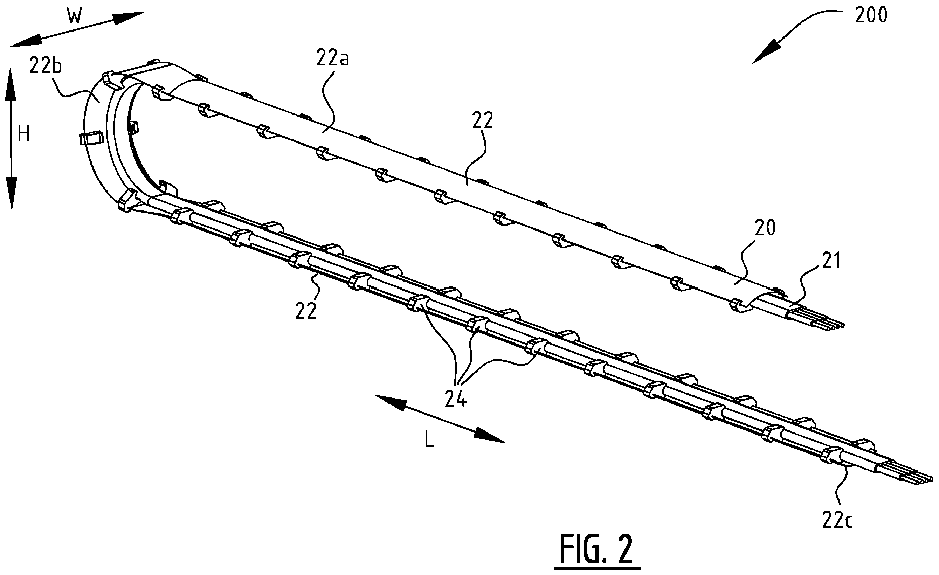

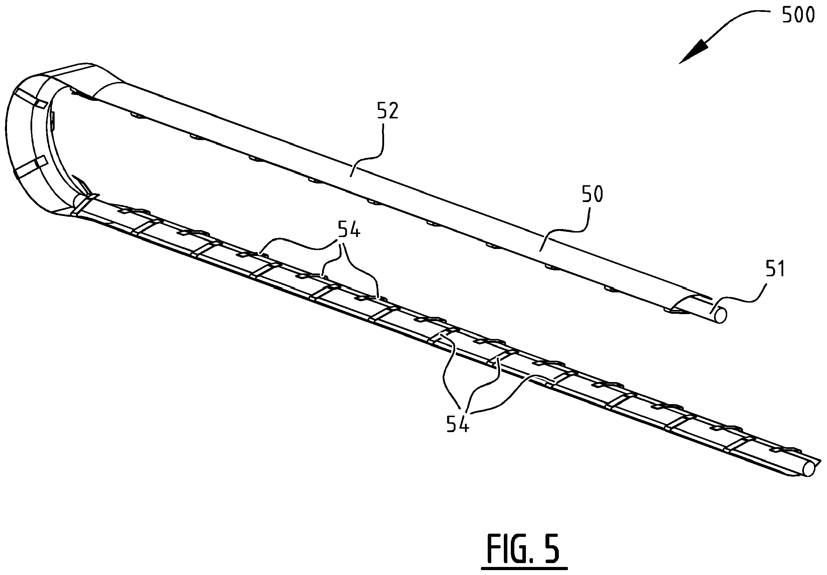

Figure 2 shows a second embodiment of the guide 20 in a combination 200 with a flat cable 21 held by the guide 20. The guide 20 comprises an elongate strip 22. Of the strip 22 a first segment 22a is shown in the first configuration and a second segment 22b is shown in the second configuration, as described above. Further, the guide 20 comprises clamps 24 for retaining the flat cable 21 with respect to the guide 20 in height H and width W directions perpendicular to the longitudinal direction L of the guide 20. The clamps 24 are connected to the strip 22 at either side thereof for an efficient attaching and detaching of the clamps 24. Specifically, the clamps 24 are arranged opposite each other on either side of the cable 21 on a hollow side 22c of the strip 22 at both the first segment 22a and the second segment 22b. The clamps 24 on the first segment 22a in the first configuration are shown to clamp the cable 21 on either side of the cable 21 and the clamps 24 on the second segment 22b in the second configuration are shown to be disengaged from the cable 21. The clamps 24 are configured to retain the cable 21 in the first configuration of the strip 22 and to release the cable 21 in the second configuration of the strip 22. In other words, when moving the first segment 22a from the first configuration to the second configuration, the clamps 24 on the first segment 22a disengage from the cable 21 as a result of the straightening of the first segment 22a in the width direction W. Simultaneously, the clamps 24 on the second segment 22b clamp the cable 21 as a result of the bending of the second segment 22b in the width direction W when moving the second segment 22b from the second configuration to the first configuration. This prevents wear and tear and increases the lifetime of the cable 21 and/or the guide 20. In figure 5, the guide 50 comprises a strip 52 and bindings 54 for retaining a cable 51 in a similar way as the clamps 24 in figure 2. The bindings 54 in figure 5 are arranged alternately on either side of the cable 51 and may be integral with the strip 52.

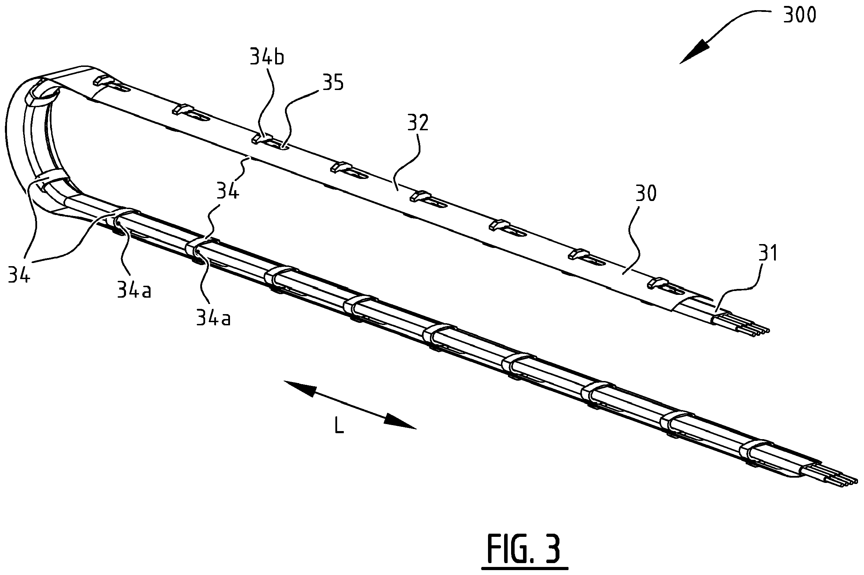

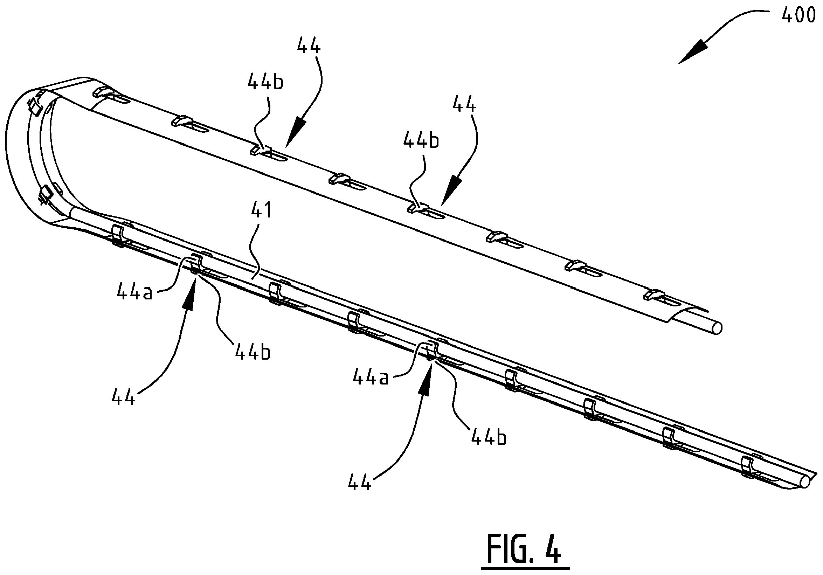

Figure 3 shows a third embodiment of the guide 30 in a combination 300 with a flat cable 31 held by the guide 30. The guide 30 comprises an elongate strip 32 and retaining means 34, each of the retaining means 34 comprising an eyelet 34a for retaining the flat cable 31, possibly by clamping. The retaining means 34 are arranged in corresponding longitudinal slots 35 in the strip 32 so as to be moveable with respect to the strip 32 in a longitudinal direction L thereof to allow a combined bending of the cable 31 and the strip 32 in the longitudinal direction L. It can be seen that the retaining means 34 are positioned on one end of the slots 35, as seen along the strip 32, on one side of the curve, resulting from the combined bending, and that on the other side of the curve the retaining means 34 are positioned on the other end of the slots 35 as seen along the strip 32. This is a result of arranging the retaining means 34 in the slots 35 to obviate the length difference between the strip 32 in the second configuration and the radially inward cable 31. Each of the retaining means 34 comprises a locking member 34b to be inserted through one of the slots 35. The locking member 34b is T-shaped for an efficient attaching and detaching of the retaining means 34 upon rotation thereof with respect to the slots 35 after insertion. In figure 4, each of the retaining means 44 comprises a locking member 44b, similar to the retaining means 34 in figure 3, and a clip 44a for retaining a cable 41 by moving, e.g. by pressing or clicking, the cable 41 into the clip 44a.

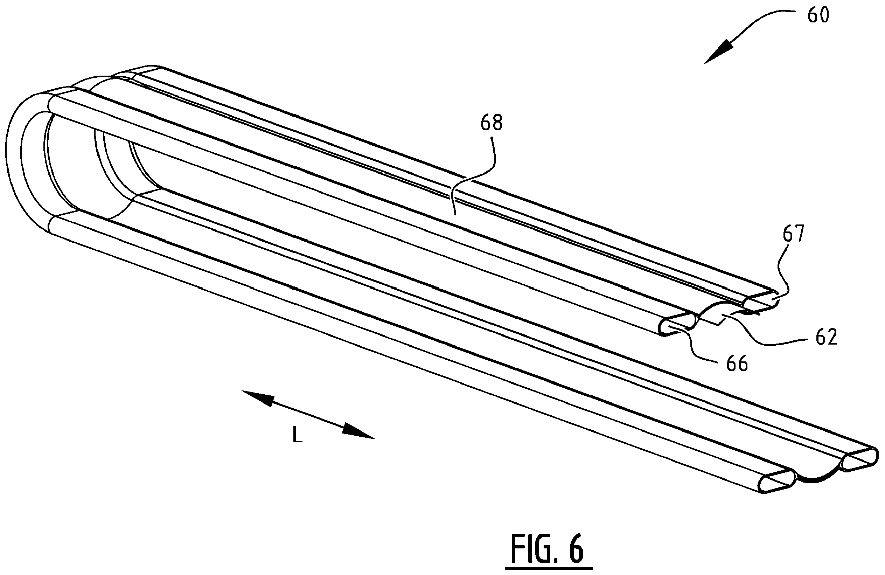

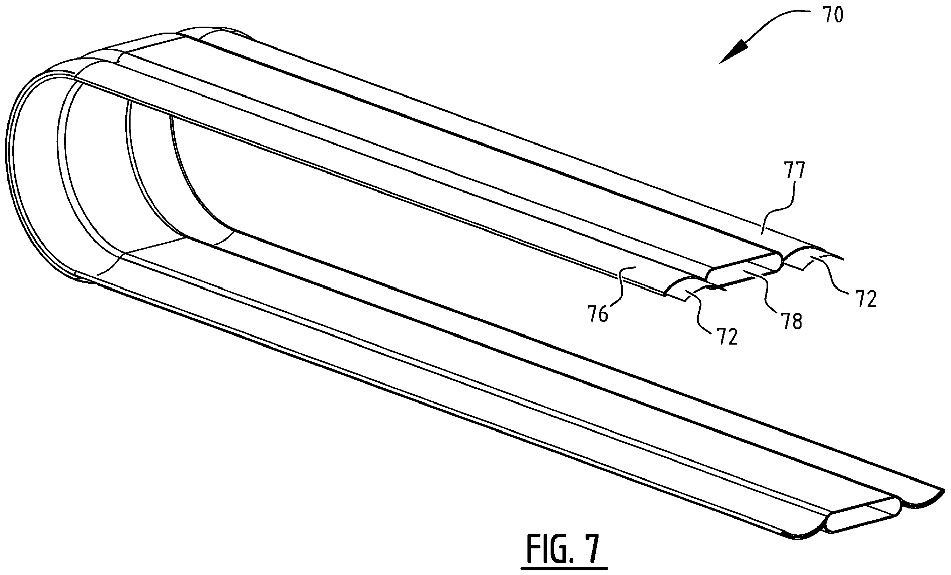

Figure 6 shows a guide 60 comprising an elongate strip 62. The guide 60 further comprises two channels 66, 67, each for holding a cable. The channels 66, 67 extend parallel to the strip 62 in the longitudinal direction L. The channels 66, 67 are coupled by an elongate profile 68 holding the strip 62. The elongate profile 68 is shaped similar to the strip 62 to effectively guide the strip 62. The elongate profile 68 may be integral with the channels 66, 67. As an alternative, figure 7 shows a guide 70 comprising one channel 78 for holding a flat cable and two elongate profiles 76, 77 extending parallel to the channel 78, on either side thereof, in the longitudinal direction L. Each of the elongate profiles 76, 77 is provided with an elongate strip 72 for holding a cable.

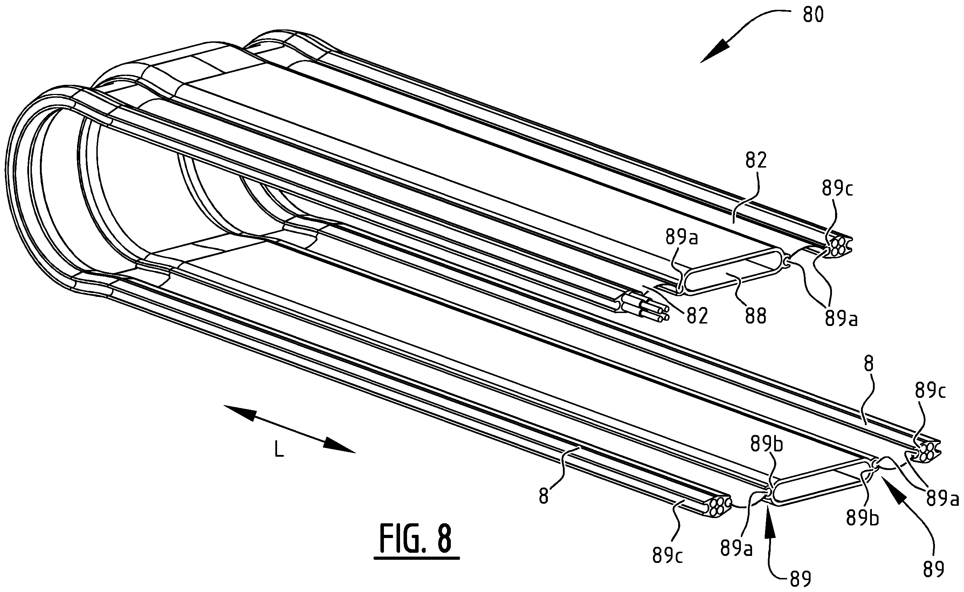

Figure 8 shows a guide 80 comprising a channel 88 and two elongate strips 82 extending parallel to the channel 88 in the longitudinal direction L. The guide 80 further comprises coupling mechanisms 89 for modularly coupling the strips 82 to the channel 88. Each strip 82 is provided with elongate cylindrical elements 89a extending in the longitudinal direction L parallel to the strip 82 on either side thereof. In addition, the channel 88 is provided with grooves 89b extending in the longitudinal direction L parallel to the channel 88 on either side thereof to form a snap coupling 89 with the cylindrical elements 89a. The coupling mechanism 89 may be used for modularly coupling the guide 80 to a second guide 8 with cooperating coupling means. As shown in figure 8, a cylindrical element 89a of the first guide 80 can be received by a groove 89c of the second guide 8. Alternatively, the first guide 80 may comprise further coupling means for coupling the guide 80 to a further guide.

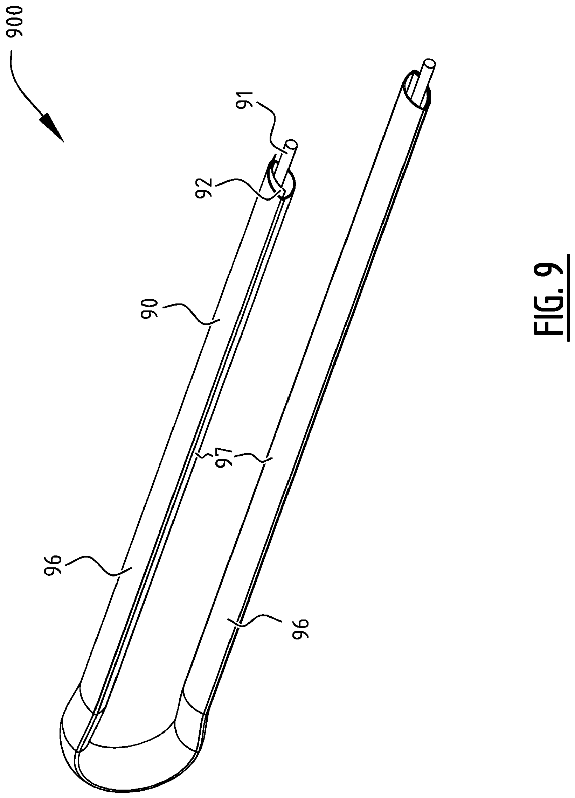

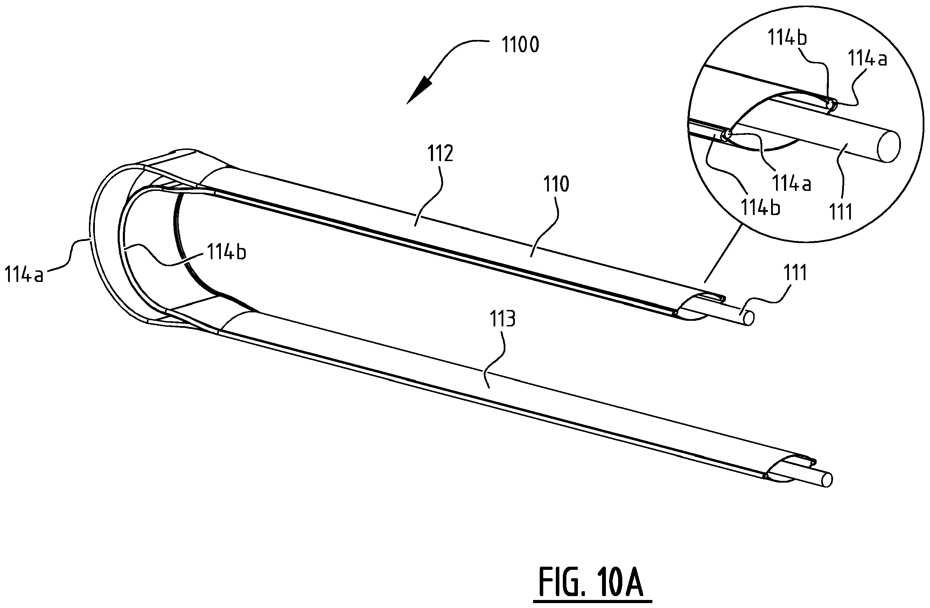

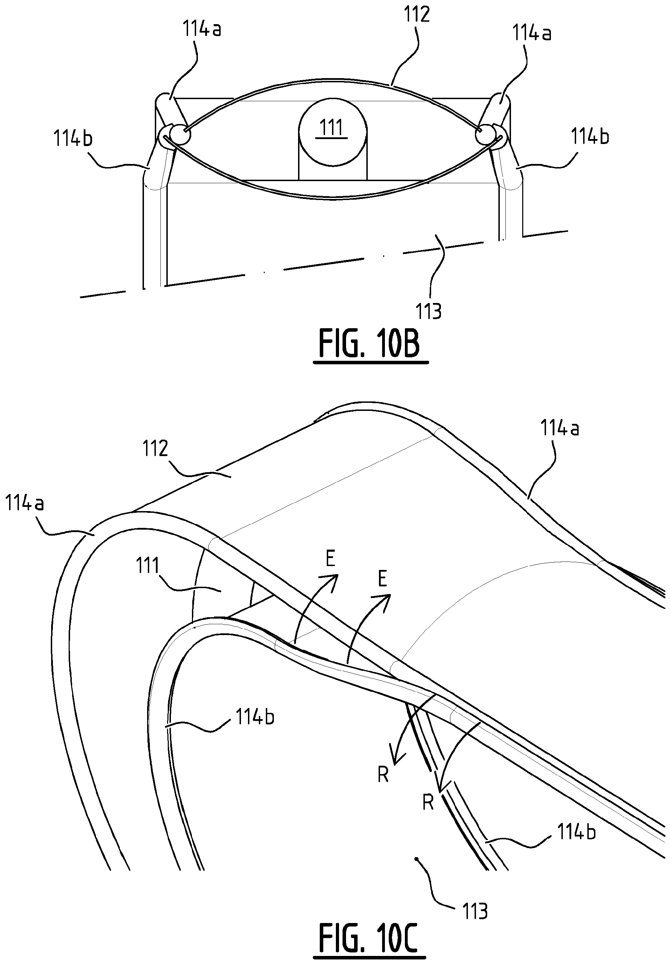

In figure 9, the guide 90 holding a cable 91 comprises two parallel profiles, an outer elongate profile 96 and an inner elongate profile 97, each having a curved cross-section. The radius of curvature of the outer profile 96 exceeds the radius of curvature of the inner profile 97. The guide 90 further comprises an elongate strip 92 received by the outer profile 96 such that the cable 91 is held between the strip 92 and the inner profile 97.

The above description of the attached drawings is provided merely for illustrative purposes to contribute to comprehension of the invention, and is not intended to limit the scope of the appended claims in any way or form. In fact, the invention is limited also by the claims, which now follow.

## Claims

1. Guide for at least one bendable connecting means, such as a cable, a conduit or a wire,
**characterized by**
at least one elongate strip, of which at least a segment has a first configuration, in which the segment has a bent shape in a width direction, such that the segment is straight in the longitudinal direction, and which segment has a second configuration, in which the segment is straight in the width direction, such that the strip is bendable in the longitudinal direction, wherein optionally:
- the first configuration of the segment is its neutral configuration, and/or
- the at least one strip has a flexibility for bringing the segment from the first configuration to the second configuration upon application of an external force.

2. Guide according to the previous claim, wherein the at least one strip is made of a metal, such as steel, possibly spring steel.

3. Guide according to any one or more of the foregoing claims, wherein the guide comprises two parallel strips, wherein optionally hollow sides of the two strips are directed towards each other.

4. Guide according to any one or more of the foregoing claims, wherein the guide comprises retaining means, for retaining the connecting means with respect to the guide in a direction at least perpendicular to the longitudinal direction of the guide, wherein optionally the retaining means are arranged on the at least one strip.

5. Guide according to the previous claim, wherein the retaining means comprises an enclosure, extending around the at least one strip and the connecting means, and possibly around more than one of the at least one strip, wherein optionally the enclosure is a braided mantle.

6. Guide according to claim 4, wherein the retaining means are configured to retain the connecting means in the first configuration of the at least one strip, and to at least partially release the connecting means in the second configuration of the at least one strip.

7. Guide according to the foregoing claim, wherein the retaining means are connected to the strip spaced apart from the center of the strip in the transverse direction thereof, preferably at a side end zone, such as the side.

8. Guide according to any of claims 4-7, wherein the retaining means are moveable with respect to the strip in a longitudinal direction thereof.

9. Guide according to the foregoing claim, wherein the retaining means are arranged in corresponding longitudinal slots in the at least one strip.

10. Guide according to any one or more of the foregoing claims, wherein the guide further comprises at least one channel, extending parallel to the at least one strip in the longitudinal direction, wherein optionally the channel and the at least one strip are provided with cooperating detachable first coupling means, such as a snap coupling.

11. Guide according to any one or more of the foregoing claims, further comprising second coupling means, for coupling the guide to a further guide with cooperating coupling means.

12. Combination of a guide according to any one or more of the foregoing claims and a connecting means, such as a cable or a wiring.

13. Combination according to the foregoing claim, wherein the connecting means is tied to the guide.

14. Device, comprising two elements which are moveable with respect to each other, connected by a combination according to claim 12 or 13.

15. Use of a guide according to any one or more of the claims 1 to 11 for guiding a bendable connecting means, such as a cable or a wiring.
